# EUROPEAN PATENT APPLICATION

(11) **EP 4 375 701 A1**
(43) Date of publication of application: **29.05.2024**
(21) Application number: 22208845.2
(22) Date of filing: 22.11.2022
(51) Int. Cl.: G01S 7/481, G01S 17/34, G01S 7/4912

(54) **DEVICE FOR SCANNING IN FMCW LIDAR RANGE MEASUREMENT**

(71) Applicant: Scantinel Photonics GmbH, 89077 Ulm (DE)
(72) Inventor: Davydenko, Vladimir, 76332 Bad Herrenalb (DE)
(74) Representative: Ostertag & Partner Patentanwälte mbB

(57) **Abstract**

A device (14) for scanning FMCW LiDAR range measurement has a light source (16) that produces light having a varying frequency. A collimating optical system (36) has a front focal plane (38) in which a plurality of emitters (32-1 to 32-4; 32-1' to 32-4') emitting measuring light are arranged. A cat's eye reflector or another type of retroreflector (42) is arranged behind the collimating optical system (36) in a light path of the emitted measuring light. A plurality of receivers (32-1 to 32-4; 32-1" to 32-4") receive a first portion (34-1a, 34-4a) of the measuring light that has been emitted by an associated emitter (32-1, 32-4) and reflected from an external object (12). The receivers further receive a second portion (34-1b, 34-4b) of the measuring light that has been reflected from the retroreflector (42). A detector (52) detects a superposition of the first and the second portion of the measuring light. A calculation unit (48) determines the range to the external object (12) from the superposition detected by the detector (52).

## Description

### BACKGROUND OF THE INVENTION

### 1. Field of the Invention

The invention relates to a device for scanning range - and preferably also velocity - measurement relative to a moving or unmoving object based on FMCW LiDAR technology. Such devices can be used, for example, in autonomously driving vehicles and may be implemented - at least to some extent - as photonic integrated circuits (PIC) that do not contain any moving parts.

### 2. Description of the Prior Art

Frequency-modulated continuous wave (FMCW) is a range and velocity measuring technology which was originally developed for RADAR applications. If light instead of radio waves are used, this technology is usually referred to as FMCW LiDAR, in which LiDAR is an acronym for "Light Detection And Ranging".

In FMCW LiDAR scanning devices, frequency-modulated light beams scan the environment. A small fraction of the light, which was diffusely reflected at an object, is received and superimposed with a local oscillator wave. The frequency difference between the two signals, which is usually referred to as beat frequency, is measured and used to compute the range of the object. By using a tunable laser as light source and a photodiode as detector, the beat frequency can be extracted directly from the photodiode current, because the photodiode delivers a current that is proportional to the squared sum of the two optical waves ("self-mixing effect"). If the Doppler shift is taken into account, the relative velocity between the scanning device and the object along the light propagation direction can be calculated, too.

Scanning devices based on this measurement principle have to be very robust and reliable if they are to be used in vehicles. This is true in particular if the vehicles drive autonomously, since the safety in autonomous driving decisively depends on the scanning device that is used to generate a three-dimensional profile of the environment. Scanning devices which are implemented as photonic integrated circuits (PIC) do not require moving components. This makes them potentially more reliable than scanning devices with moving mirrors, and thus particularly suitable for applications in vehicles.

Such PIC scanning devices are disclosed, for example, in WO 2021/239408 A1. These devices may include a distribution matrix comprising a plurality of optical switches that are arranged in a tree-like manner. The distribution matrix distributes the optical signals among different free space couplers that emit the optical signal into free space. The free space couplers are arranged in a front focal plane of a collimating optical system that directs the optical signals optical waveguides into various directions.

FMCW LiDAR scanning devices for applications in vehicles require a high spatial resolution so that also small objects can be detected even at large distances. In the prior art devices mentioned above, the available spatial resolution corresponds to the number of free space couplers or optical channels, which is equivalent to the number of pixels on a screen after post-processing. It can be shown that in the horizontal direction the number of optical channels should be at least in the order of 1.000, while in the vertical direction a smaller resolution often suffices.

Implementing so many optical channels in a PIC results in a very complex PIC layout. Thousands of optical waveguides, photodiodes, switches and splitters have to be packed on an area that should be smaller than the palm of a hand. Even if very sophisticated production facilities are available, the production yield will be low, and the price per device will be consequently high.

### SUMMARY OF THE INVENTION

It is an object of the present invention to provide a device for scanning range measurement having a simpler PIC layout.

According to the invention, this object is achieved by a device for scanning FMCW LiDAR range measurement comprising a light source configured to produce light having a varying frequency, a collimating optical system having a front focal plane, and a plurality of emitters that are configured to emit the light produced by the light source as measuring light. The emitters are arranged in a plane that coincides with the front focal plane or is optically conjugate to the front focal plane. The device further comprises a retroreflector that is arranged behind the collimating optical system in a light path of the emitted measuring light, and a plurality of receivers that are configured to receive (a) a first portion of the measuring light that has been emitted by an associated emitter and reflected from an external object and (b) a second portion of the measuring light that has been emitted by the associated emitter and reflected from the retroreflector. At least one detector is configured to detect a superposition of the first and the second portion of the measuring light. A calculation unit is configured to determine the range to the external object from the superposition detected by the detector.

The invention is based on the insight that the PIC-internal distribution of the local oscillator wave significantly contributes to the complexity of the PIC. In conventional approaches, an optical waveguide, which connects the light source with the detector of the respective channel, is required for each optical channel. The invention takes a different approach, because the local oscillator wave is not created internally in the PIC by splitting off a portion of the light produced by the light source, but by reflecting a small portion (usually only a few percent of the total intensity) of the measuring light after it has left the PIC and passed the collimating optical system.

If the measuring light was reflected by a simple reflecting element having a plane or curved reflecting surface, it would generally be reflected into a different direction and could not be easily received and guided back to the respective detector. By using a retroreflector, however, the light forming the oscillator wave will be reflected back in the same direction from which it originated. The collimating optical system then ensures that this retro-reflected portion of the measuring light enters the receiver that is associated with the emitter. A receiver is referred to as being associated with an emitter if it receives (only) the (retro-)reflected portions of measuring light that was emitted by this particular emitter.

In some embodiments, each receiver and its associated emitter are not structurally distinct, but are formed by the same photonic element. This photonic element is usually a free-space coupler that couples light guided in an optical waveguide into free space and - in the opposite direction - light propagating in free spaces into the optical waveguide. Such a configuration, which is often referred to as monostatic, has the advantage that only one free-space coupler forming the emitter and simultaneously the receiver is required for each optical channel. A disadvantage of monostatic designs is that the received measuring light has to be separated from the signal path inside the PIC, which is usually achieved by providing an optical circulator. However, such optical circulators, which often rely on the principle of polarization splitting, are complex components that increase the PIC complexity significantly.

Therefore, it may be preferred to use a bi-static configuration in which each receiver and its associated emitter are formed by different photonic elements. Then the signal separation can be performed outside the PIC, for example using bulk birefringent plates, wave-plates and Faraday rotators. These bulk components are commonly used by all optical channels and help to reduce the complexity of the PIC layout.

In a possible bi-static configuration the photonic elements forming the receivers and the associated emitters are arranged either immediately adjacent to each other or in an interleaved fashion, as this is known as such from US 2021/0316756 A1.

Alternatively, the different photonic elements forming the emitters and the receivers may be arranged at optically conjugate positions. Then the device may comprise a polarization dependent beam splitter that is arranged in a light path of the measuring light between the collimating optical system and the receivers. A quarter-wave plate may then be arranged in a light path of the measuring light between the optical collimating system and the retroreflector.

Such a configuration makes it possible to guide all the reflected light towards the receivers in a very efficient manner, because only simple bulk optical components such as a polarization dependent beam splitter and a quarter-wave plate are required. In this configuration, the emitted measuring light being in a linear state of polarization will be transformed into a circular state of polarization when passing the quarter-wave plate. The light reflected from the external object or the retroreflector passes again the quarter-wave plate that transforms the circular state of polarization back into a linear state of polarization that is orthogonal to the original linear state of polarization. The polarization dependent beam splitter passes or reflects the light depending on its state of polarization.

In all configurations in which signal separation is achieved based on polarization control, the retroreflector should be able to preserve the state of polarization. However, this ability is generally, i.e. also in the absence of polarization control, advantageous, because it ensures better interference with the first portion of the measuring light that has been reflected from the external object. A cat's eye reflector is particularly suitable for the present invention because this type of retroreflector perfectly maintains the state of polarization. Most other available retroreflectors, e.g. corner reflectors comprising a set of three mutually perpendicular reflective surfaces, do not maintain the state of polarization.

The device may comprise a transparent optical element having no refractive power that supports the retroreflector. Since the retroreflector is arranged in the light path of the measuring light, it inevitably reduces the intensity of the measuring light that will ultimately impinge on the external object. Any structure that supports the retroreflector may also impede the propagation of the measuring light. By using as supporting structure a transparent optical element with no refractive power, e.g., a glass plate or a wedge, no additional light losses occur.

The transparent optical element may be a protective window through which the measuring light leaves the device. Most devices comprise such a window so that no additional support structure is required.

Alternatively, the retroreflector may be supported by one or more elongated elements that are so thin that they add little to the absorption of the measuring light.

In an embodiment, the retroreflector is arranged in a back focal plane of the collimating optical system. Since the back focal plane is a pupil plane of the collimating optical system, the measuring light beams emitted from all the emitters completely overlap. Thus, it is possible to retro-reflect a portion of measuring light emitted from any of the emitters with only one retroreflector.

This retroreflector may be arranged at a position close to the circumference of the measuring light beams' profile. Such a position is advantageous, because the measuring light beams typically have a Gaussian intensity profile. Even if the retroreflector is comparatively large, the position at the circumference ensures that only a small portion of the measuring light is retro-reflected.

For reasons of symmetry, however, it may be preferred to arrange the retroreflector on the optical axis of the collimating optical system. At this position the measuring light beams have their maximum intensity. However, if the diameter of the retroreflector is sufficiently small, the amount of retro-reflected measuring light can nevertheless be kept small enough.

Alternatively, the device may comprise not only one, but a plurality of retroreflectors that are arranged on a line that delimits a field of view of the device. More than one retroreflectors are required in this embodiment because - unless the retroreflectors are arranged in the pupil plane - there is generally no position on this line at which all measuring light beams propagating along different directions overlap. Positioning the retroreflectors outside the pupil plane of the collimating optical system is often advantageous with a view to the longitudinal dimensions of the device.

### BRIEF DESCRIPTION OF THE DRAWINGS

Various features and advantages of the present invention may be more readily understood with reference to the following detailed description taken in conjunction with the accompanying drawings in which:
- Figure 1: is a schematic side view of a vehicle approaching an object which is detected by a scanning device according to the invention;
- Figure 2: is a top view of the scanning device shown in Figure 1;
- Figure 3: schematically shows the design of the scanning device according to a first embodiment in which the emitter of each optical channel is simultaneously the receiver;

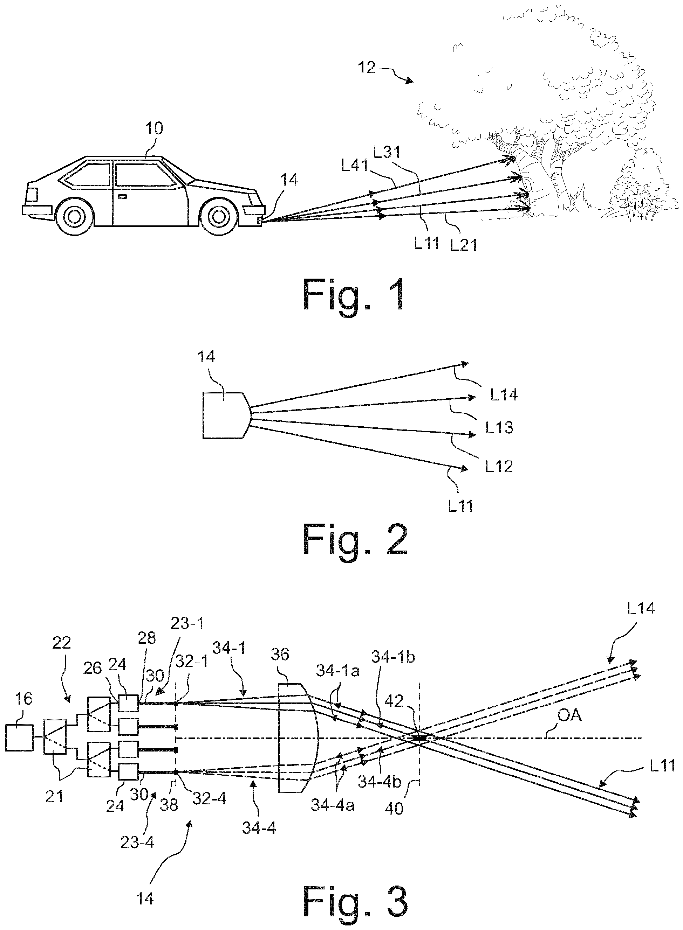

- Figure 2: is a graph illustrating the time dependency of the frequency of the measuring light;

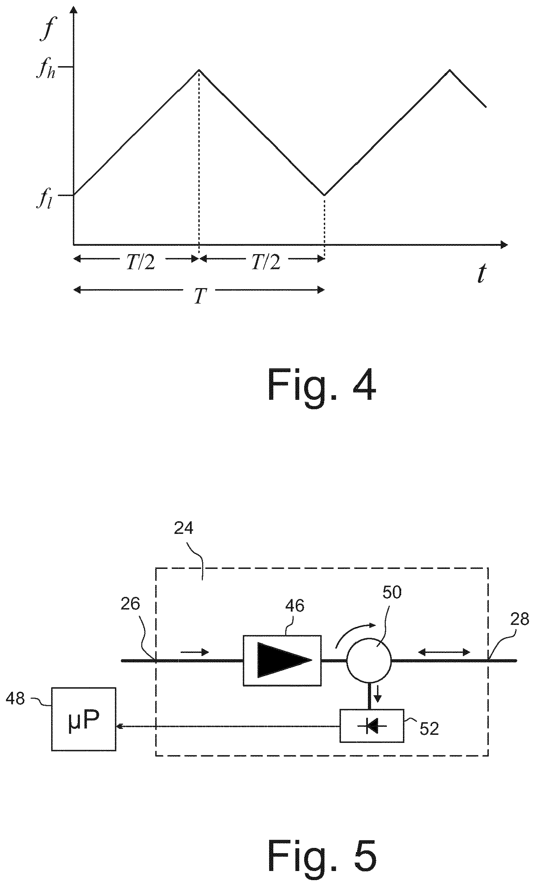

- Figure 5: schematically shows important components that are contained in each optical channel;

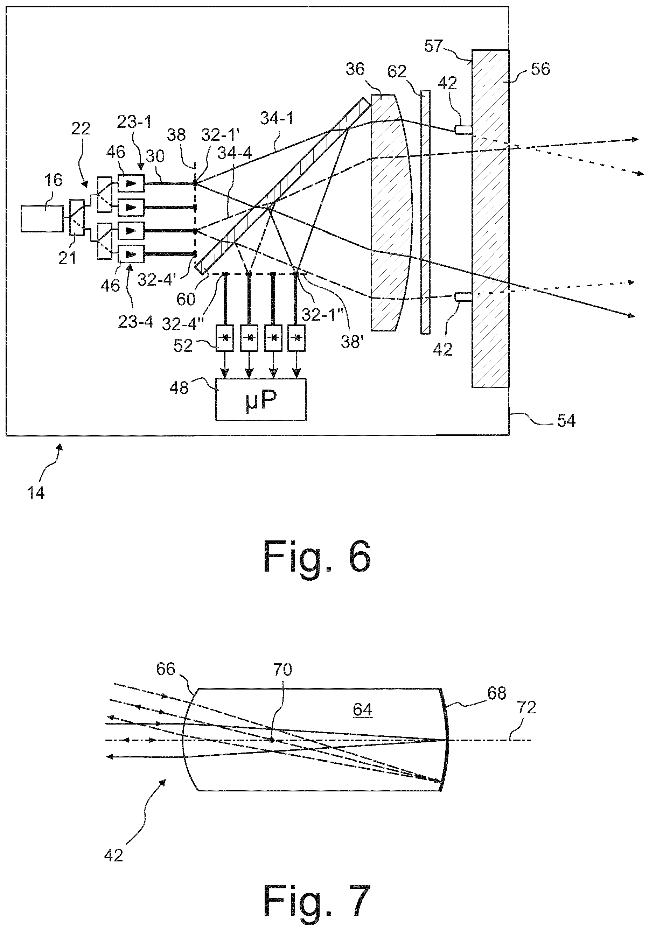

- Figure 6: schematically shows the design of the scanning device according a second embodiment comprising separate emitters and receivers;
- Figure 7: is a meridional section through a cat's eye retroreflector used in the embodiment shown in Figure 6.

### DETAILED DESCRIPTION OF EMBODIMENTS

### 1. Application scenario

Figure 1 is a schematic side view of a vehicle 10 approaching an object 12 that is represented by a tree. The vehicle 10 has at least one scanning device 14 that uses light beams L11, L21, L31 and L41 to scan the environment ahead of the vehicle 10. Based on the distance information generated by the scanning device 14, a three-dimensional image of the environment is calculated. In addition, the scanning device 14 determines the relative speed to the object 12. This information is particularly important if the object 12 is another vehicle, an animal or a pedestrian that is also moving.

As can be seen in Figure 1, the scanning device 14 emits light beams L11 to L41 in different directions in a vertical plane (in Figure 1 this is the paper plane) in order to scan the environment in a vertical direction. Scanning takes place also in a horizontal direction, as this is shown in Figure 2 which is a top view on the scanning device 14. Four light beams L11, L12, L13 and L14 are shown which are emitted in different directions in a horizontal plane.

For reasons of clarity, it is assumed in Figures 1 and 2 that only four light beams Ln1 to Ln4 in four different planes - i.e., a total of 16 light beams - are generated by the scanning device 14. However, in reality the scanning device 14 emits significantly more light beams. For example, k·2ⁿ light beams are preferred, where n is a natural number between 7 and 13 and indicates how many beams are emitted in one of k planes, where k is a natural number between 1 and 16. In some embodiments, more than one light beam is emitted at a given time in order to achieve the desired spatial and temporal resolution.

### 2. Scanning Device

Figure 3 schematically shows the basic design of the scanning device 14 according to a first embodiment of the invention. The scanning device 14 is designed as a LiDAR system and comprises an FMCW light source 16 that produces light.

As illustrated in Figure 4, the light produced by the light source 16 has a frequency *f* that varies ("chirps") periodically over time *t* between a lower frequency *fₗ* and a higher frequency *fₕ*. Each measurement interval with a chirp duration T is divided into two halves of equal length T/2. During the first interval the frequency *f* increases linearly with a constant and positive upchirp rate *r_{chirp}* = d*f*/d*t.* During the second interval, the frequency *f* decreases linearly with a constant negative downchirp rate *-**r**_{chirp}.* The frequency of the light can thus be described by a periodic triangular function. However, other functional relationships are also contemplated, e.g., sawtooth functions.

Referring again to Figure 3, the light source 16 is connected to a switch matrix 22 comprising a plurality of optical switches 21 that may be configured as thermo-optical switches, for example. The switch matrix 22 distributes the light among four optical channels 23-1 to 23-4. Each optical channel 23-1 to 23-4 comprises a processing unit 24 that will be described in further detail below with reference to Figure 5. Each processing unit 24 has a light input 26 connected to the switch matrix 22 and a light output 28 connected to an optical waveguide 30 that terminates at a free space coupler 32-1 to 32-4. The free space couplers 32-1 to 32-4 may be formed by an edge or a grating coupler, for example, as this in known in the art as such.

In the following, the free space couplers 32-1 to 32-4 are also referred to as emitters and receivers. The free space couplers 32-1 to 32-4 form emitters, because they emit - subsequently or simultaneously, but individually for each optical channel 23-1 to 23-4 - light produced by the light source 16 as measuring light. Two diverging measuring light bundles 34-1 and 34-4 emitted by the emitters 32-1 and 32-4, respectively, are shown in Figure 3 for the sake of illustration. The free space couplers 32-1 to 32-4 form also receivers, because they receive measuring light that has been reflected, as this will be explained in more detail below.

In a light path of the measuring light a collimating optical system 36 is arranged. The latter is represented in Figure 3 by a single lens element only, but may comprise more than one lens and/or other optical elements. The collimating optical system has a front focal plane 38 in which the emitters 32-1 to 32-4 are arranged. The term "plane" shall be construed broadly, because it may not be perfectly planar, but slightly curved. As a result of this configuration, the diverging measuring light bundles 34-1 and 34-4 are collimated by the collimating optical system, as this is shown in Figure 3. The angle of the collimated measuring light beams 34-1 and 34-4 relative to an optical axis OA of the collimating optical system depends on the distance of the emitter 32-1 to 32-4, which emits the respective measuring light beam 34-1 or 34-4, from the optical axis OA. Therefore, the scanning device 14 is able to direct, either subsequently or simultaneously, measuring light beams 34-1 and 34-4 into different directions, thereby scanning the environment.

The emitted collimated measuring light beams 34-1 and 34-4 are to some extent diffusely reflected at an external object such as the object 12 shown in Figure 1. A small portion of the reflected measuring light returns to the scanning device 14. Only a first portion 34-1a, 34-4a of the diffusely reflected measuring light that propagates anti-parallel to the collimated measuring light beams 34-1 and 34-4 is able to enter the respective free space coupler 32-1 to 32-4 that now has the function of a receiver. The processing of the reflected light received by the receivers 32-1 to 32-4 will be explained in more detail below with reference to Figure 5.

The collimating optical system 36 has a back focal plane 40 which is a pupil plane of the collimating optical system 36. Thus, all measuring light beams 32-1 and 32-4 cross the optical axis OA in the back focal plane 40 and completely overlap. In the back focal plane 40 a retroreflector 42 is arranged coaxially with the optical axis OA. The retroreflector 42 retro-reflects a second portion 34-1b, 34-4b of the measuring light, which impinges on the retroreflector 42. Also the retro-reflected measuring light 34-1b, 34-4b propagates anti-parallel to the collimated measuring light beams 34-1 and 34-4 and is thus able to enter the respective receiver 34-1 and 34-4 from which it originated.

As a result, the free space coupler 32-1, for example, emits a measuring light beam 34-1 from which a first portion 34-1a is reflected by the external object 12 anti-parallel to the scan direction, i.e., the direction of the collimated measuring light beam 34-1. A second portion 34-1b of the measuring light beam 34-1 is reflected at the fixed retroreflector 42 - again anti-parallel to the scan direction. Thus, both reflected portions of the measuring light propagate anti-parallel to the scan direction and are focused by the collimating optical system 36 on the free space coupler 32-1 working now as a receiver.

Figure 5 illustrates schematically the main components of one of the processing units 24. Light produced by the light source 16 and input at the light input 26 is amplified in an amplifier 46.

The processing unit 24 further comprises an optical circulator 50 that passes the amplified light to the light exit 28. Received light that enters the light exit 28 is separated from the light path by the optical circulator 50 and guided towards a detector 52 that may be realized as a photodiode. As explained above, the received light includes a first portion 34-1a to 34-4a and a second portion 34-1b to 34-4b that has been reflected from the external object 12 and the retroreflector 42, respectively. The detector 52 thus detects a superposition of the first portion 34-1a to 34-4a and the second portion 34-1b to 34-4b of the respective reflected measuring light 34-1 to 34-4.

Since the frequencies of the superimposed light portions are slightly different due to the different optical path lengths, the superimposition results in a low frequency beat signal that is detected by the detector 52. A calculation unit, which may be part of the device control unit 48, then calculates the distance R and the relative radial velocity ***ν*** to the object 12 on the basis of the detected beat frequency.

The second portion 34-1b to 34-4b of the reflected measuring light therefore serves as local oscillator wave. In contrast to conventional approaches, no additional optical waveguides are required to guide a portion of the produced light directly from by the light source 16 towards the detectors 52 of the processing units 24.

Selecting individual optical channels for emitting measuring light may alternatively accomplished by using a matrix of optical switches, as this is known in the art as such, see, for example, WO 2021/239408 A1 that was mentioned at the outset. Such a matrix comprises a plurality of optical switches that are arranged in a tree-like manner and can be individually controlled.

In certain PIC layouts, the measuring light bundles leave the PIC perpendicularly or at an angle <90° to the plane of the PIC substrate. The collimating optical system 36 then has an optical axis OA that is also perpendicular or inclined to this plane.

Beam steering in vertical planes may be accomplished by a mechanical scanner comprising a rotating or oscillating mirror or prism. In other embodiments, several PICs each representing a different emission plane are stacked one above the other so that the free space couplers 32-1 to 32-4 do not form a line, but a two-dimensional array. In this case no mechanical scanner for the second scan direction is required.

### 3. Second embodiment

Figure 6 schematically illustrates a scanning device 14 according to a second embodiment. The scanning device has a housing 54 comprising a protective window 56 that is formed by a transparent plate and through which the measuring light leaves and - after reflection from an external object 12 - enters the scanning device 14. The inner side 57 of the protective window 56 supports a plurality of retroreflectors 42 that are arranged outside the pupil plane of the collimating optical system 36 and on a line that delimits the field of view (FOV) of the scanning device 14. In Figure 6 only two retroreflectors 42 on opposite sides are visible; in reality more than two retroreflectors 42 are distributed in a plane that is perpendicular to the optical axis OA. This arrangement ensures that all the measuring light beams propagating along the different scan directions will be incident on at least one retroreflector 42 before they leave the scanning device 14. Since the measuring light beams typically have a Gaussian intensity profile, only a small fraction of the total intensity is retro-reflected, because the measuring light beams "touch" the retroreflectors 42 with their low intensity circumference.

The scanning device 14 shown in Figure 6 is an example of a bi-static configuration in which there are separate emitters and receivers. More specifically, emitters denoted by 32-1' to 32-4' are arranged on a common transmitter PIC that is connected to the light source 16 and includes a switch matrix 22 and amplifiers 46 in each optical channel 23-1 to 23-4. Receivers 32-1" to 32-4" are arranged on a common receiver PIC that includes a detector 52 for each optical channel 23-1 to 23-4. As in the first embodiment, the emitters 32-1' to 32-4' and the receivers 32-1" to 32-4" are formed by free space couplers.

The emitters 32-1' to 32-4' and the receivers 32-1" to 32-4" are arranged at optically conjugate positions. In this embodiment this is achieved by arranging the receivers 32-1" to 32-4" at a mirrored front focal plane 38' of the collimating optical system 36. As a result of the optical conjugation, measuring light that was emitted by the emitter 32-1' and reflected either at the external object 12 or at one of the retroreflectors 42 will be focused by the collimating optical system 36 on the associated receiver 32-1".

The measuring light reflected from the external object 12 and the retroreflectors 42 is separated from the light path by a polarization dependent beam splitter 60 having a splitting plane that is inclined at an angle of 45° relative to the optical axis OA of the collimating optical system 36. A quarter-wave plate 62, which is arranged in a light path of the measuring light between the optical collimating system 36 and the retroreflectors 42, transforms the TE state of polarization (SOP) of the emitted measuring light into a circular SOP.

After being reflected at the external object 12 or the internal retroreflectors 42, the measuring light passes the quarter-wave plate 62 again. The latter transforms the circular SOP of the reflected light into a TM SOP. Due to the now orthogonal SOP, the polarization dependent beam splitter 60 reflects the converging light bundle by 90° towards the receiver PIC, where it couples into the associated receiver 32-1" to 32-4".

In this embodiment, the separation of the reflected light from the emission light path relies on the control of the state of polarization. For that reason, the retroreflectors 42 must maintain the state of polarization. Conventional corner retroreflectors do not have this property.

Figure 7 illustrates a cat's eye retroreflector 42 that maintains the state of polarization and can therefore be used in the second embodiment shown in Figure 6. The cat's eye retroreflector 42 comprises a rotationally symmetric glass body 64 having a spherically curved front surface 66 forming a lens, and a reflecting rear surface 68 that is also spherically curved and forms a mirror. Both surfaces 66, 68 have the same center of curvature 70. Thus, the collimated light entering the front surface 66 is focused on the rear surface 68 and is retro-reflected as collimated light.

Except for the quarter-wave plate 62, the collimating optical system 36 and a mechanical scanner (not shown in Figure 6), all optical components are arranged on one or more photonic substrates. The embodiments disclosed herein can be realized using any integrated photonic platform, e.g. silicon, silicon nitride or indium phosphide. However, it may also be envisaged to have only some of these components integrated in the PIC, while others are connected to the PIC via an optical fiber.

## Claims

1. A device (14) for scanning FMCW LiDAR range measurement, comprising
a light source (16) configured to produce light having a varying frequency,
a collimating optical system (36) having a front focal plane (38),
a plurality of emitters (32-1 to 32-4; 32-1' to 32-4') that are configured to emit the light produced by the light source as measuring light, wherein the emitters are arranged in a plane that coincides with the front focal plane (38) or is optically conjugate to the front focal plane,
a retroreflector (42) that is arranged behind the collimating optical system (36) in a light path of the emitted measuring light,
a plurality of receivers (32-1 to 32-4; 32-1" to 32-4") that are configured to receive
a first portion (34-1a, 34-4a) of the measuring light that has been emitted by an associated emitter (32-1, 32-4) and reflected from an external object (12) and
a second portion (34-1b, 34-4b) of the measuring light that has been emitted by the associated emitter and reflected from the retroreflector (42),
at least one detector (52) that is configured to detect a superposition of the first and the second portion of the measuring light,
a calculation unit (48) that is configured to determine the range to the external object (12) from the superposition detected by the detector (52).

2. The device of claim 1, wherein each receiver and its associated emitter are formed by the same photonic element (32-1 to 32-4).

3. The device of claim 1, wherein each receiver (32-1" to 32-4") and its associated emitter (32-1' to 32-4') are formed by different photonic elements that are arranged immediately adjacent to each other.

4. The device of claim 1, wherein each receiver (32-1" to 32-4") and its associated emitter (32-1' to 32-4') are formed by different photonic elements that are arranged at optically conjugate positions.

5. The device of claim 3 or 4, wherein the device comprises
a polarization dependent beam splitter (60) that is arranged in a light path of the measuring light between the collimating optical system (36) and the receivers (32-1" to 32-4"), and
a quarter-wave plate (62) that is arranged in a light path of the measuring light between the optical collimating system (36) and the retroreflector (42).

6. The device of claim any of the preceding claims, wherein the retroreflector (42) preserves the state of polarization.

7. The device of claim 6, wherein the retroreflector (42) is a cat's eye reflector.

8. The device of any of the preceding claims, comprising a transparent optical element (56) having no refractive power that supports the retroreflector (42).

9. The device of claim 78, wherein the transparent optical element is a protective window (56) through which the measuring light leaves the device (14).

10. The device of any of the preceding claims, wherein the retroreflector (42) is arranged in a back focal plane (40) of the collimating optical system (36).

11. The device of any of the preceding claims, comprising a plurality of retroreflectors (429 that are arranged on a line that delimits a field of view of the device (42).
